# EUROPÄISCHE PATENTSCHRIFT

(11) **EP 3 085 964 B1**
(45) Veröffentlichungstag und Bekanntmachung des Hinweises auf die Patenterteilung: **11.12.2019**
(21) Anmeldenummer: 15164361.6
(22) Anmeldetag: 21.04.2015
(51) Int. Cl.: F04D 19/04, F04D 29/02, F04D 29/32, B22F 5/04, B22F 5/00, B22F 3/105

(54) **HERSTELLUNG EINES VAKUUMPUMPEN-TEILS MITTELS EINES METALLISCHEN, GENERATIVEN FERTIGUNGSVERFAHRENS**
PRODUCTION OF A VACUUM PUMP PART BY METALLIC ADDITIVE MANUFACTURING
PRODUCTION D'UN COMPOSANT DE POMPE À VIDE PAR FABRICATION ADDITIVE MÉTALLIQUE

(43) Veröffentlichungstag der Anmeldung: 26.10.2016
(73) Patentinhaber: PFEIFFER VACUUM GMBH, 35614 Asslar (DE)
(72) Erfinder: Jung, Jürgen, 35745 Herborn (DE); Keller, Jens, 35614 Asslar (DE); Hofmann, Jan, 35305 Grünberg (DE)
(74) Vertreter: Manitz Finsterwald Patent- und Rechtsanwaltspartnerschaft mbB

(56) Entgegenhaltungen:
- EP-A1- 2 796 726
- EP-A2- 2 740 943
- WO-A1-02/35099
- WO-A1-02/35100
- WO-A1-2013/151015
- JP-A- S6 163 385

## Beschreibung

Die vorliegende Erfindung betrifft ein Verfahren zur Herstellung eines Bauteils einer Turbomolekularpumpe, ein Bauteil für eine Turbomolekularpumpe sowie eine Turbomolekularpumpe.

Eine Vakuumpumpe, wie zum Beispiel eine Turbomolekularpumpe oder eine Wälzkolbenpumpe, besteht aus mehreren Bauteilen. Dabei können einige Bauteile eine komplexe Geometrie aufweisen, so dass deren Herstellung kostenintensiv ist. Außerdem unterliegen bei Vakuumpumpen manche Bauteile im Betrieb einer hohen mechanischen Beanspruchung. Die mechanische Belastbarkeit der Bauteile hängt hauptsächlich vom Material der Bauteile ab. Bei Vakuumpumpen, und insbesondere bei Turbomolekularpumpen, bestehen insbesondere die hochbelasteten Bauteile normalerweise aus Aluminium, das eine ausreichende Materialfestigkeit bereitstellt.

Bei der Herstellung von Bauteilen einer Vakuumpumpe, insbesondere von Bauteilen, die aus einem Block Rohmaterial herausgefräst werden, fällt eine verhältnismäßig hohe Menge an Abfall ab. Beispielsweise wird bei der Herstellung einer Rotor- oder Statorscheibe einer turbomolekularen Pumpstufe einer Turbomolekularpumpe aus einem Block Rohmaterial durch den Zerspanvorgang über 90 % des Ausgangsmaterials zerspant.

Die EP 2 796 726 A1 offenbart die Anwendung eines generativen Fertigungsverfahrens zur Herstellung eines Bauteils einer Vakuumpumpe. Weiterer Stand der Technik ist aus WO 02/35099 A1, EP 2 740 943 A1, WO 2013/151015 A1 und WO 02/35100 A1 bekannt.

Der vorliegenden Erfindung liegt die Aufgabe zugrunde, ein verbessertes Verfahren zur Herstellung eines Bauteils einer Vakuumpumpe bereitzustellen, mittels dem auch komplexe Bauteilgeometrien schnell, kosteneffizient und mit geringem Materialaufwand realisiert werden können. Außerdem liegt der vorliegenden Erfindung die Aufgabe zugrunde, ein Bauteil für eine Vakuumpumpe bereitzustellen, das schnell und kosteneffizient hergestellt werden kann und bevorzugt außerdem eine hohe mechanische Belastbarkeit aufweist.

Die Aufgabe wird durch ein Verfahren mit den Merkmalen des Anspruchs 1 bzw. durch ein Bauteil mit den Merkmalen des Anspruchs 8 gelöst.

Ein erfindungsgemäßes Verfahren zur Herstellung eines Bauteils einer Turbomolekularpumpe ist in Anspruch 1 definiert.

Unter Generativen Fertigungsverfahren versteht man die Fertigung bzw. Formgebung eines Bauteils durch Aneinanderfügen von Volumenelementen, wie zum Beispiel von Schichten. Bei bisherigen Fertigungsverfahren wurde die Formgebung vor allem durch Drehen oder Fräsen erreicht. Ein derartiger Materialabtrag kann bei einem Generativen Fertigungsverfahren entfallen bzw. auf einen geringen Umfang im Bereich der Nachbearbeitung reduziert werden. Außerdem wird bei Generativen Fertigungsverfahren keine Gießform wie bei Gussteilen benötigt.

Durch das Generative Fertigungsverfahren können insbesondere auch komplexe Bauteile der Vakuumpumpe einfach, schnell und kostengünstig und unter Verwendung von Materialien, die im Betrieb eine hohe Belastbarkeit aufweisen, hergestellt werden. Generative Fertigungsverfahren sind dabei insbesondere Verfahren unter der genormten Bezeichnung AM für Additive Manufacturing (VDI-Norm 3404).

Bevorzugt umfasst das Generative Fertigungsverfahren, dass das Bauteil nach wenigstens einem der Verfahren Stereolithographie, Laserschmelzen, Lasersintern, selektives Lasersintern, Schicht-Laminat-Verfahren, Extrusion, Fused Deposition Modelling, Laminated Object Modelling oder 3D Printing hergestellt wird. Die vorstehend genannten Fertigungsverfahren sind an sich bekannt.

Nach einer Weiterbildung der Erfindung wird das Bauteil auf der Basis von wenigstens einem rechnerinternen Datenmodell des Bauteils hergestellt. Das rechnerinterne Datenmodell kann zum Beispiel ein 3D-CAD-Volumenmodell des Bauteils sein, das virtuell in einem Rechner bzw. Computer erzeugt wird. Das Datenmodell ermöglicht es einem Benutzer, das Bauteil bezüglich aller seiner Eigenschaften zu betrachten, es zu drehen, zu wenden, einzufärben und anderweitig zu manipulieren. Es ermöglicht aber zum Beispiel keine physikalischen Tests an dem Bauteil.

Um mittels eines Generativen Fertigungsverfahrens aus dem rechnerinternen Datenmodell ein reales physikalisches Bauteil zu erzeugen, kann das Modell mathematisch in viele gleich dicke Schichten zerschnitten werden. Die Schichten können dabei eine Dicke von zum Beispiel ca. 0,1 mm aufweisen. Die Konturinformationen können einer generativen Fertigungsanlage zugeführt werden, die auch als Fabrikator bezeichnet wird. Die Fertigungsanlage erzeugt mit Hilfe der Konturinformationen jeweils eine Scheibe des Bauteils inklusive der exakten und äußeren Berandung und fügt diese an eine bereits schon vorher gefertigte Scheibe so an, dass Schicht für Schicht von oben nach unten das Bauteil entsteht.

Vorzugsweise wird das Bauteil aus wenigstens einem formlosen oder formneutralen Material mittels chemischer und/oder physikalischer Prozesse gefertigt. Bei dem formlosen Material kann es sich insbesondere um eine Flüssigkeit oder ein Pulver handeln. Bei dem formneutralen Material kann es sich beispielsweise um ein band- oder drahtförmiges Material handeln.

Nach einer Weiterbildung der Erfindung wird das Bauteil aus wenigstens zwei Bauteilschichten, zum Beispiel mittels des vorstehend erwähnten Fabrikators, aufgebaut, wobei die Bauteilschichten zeitlich gesehen nacheinander und räumlich gesehen zumindest im Wesentlichen übereinander gefertigt werden. Durch den Fabrikator können die Bauteilschichten gemäß den über ein virtuelles Modell bereitgestellten Konturinformationen, inklusive der exakten äußeren und inneren Berandung der jeweiligen Schicht, Schicht für Schicht von unten nach oben aufgebaut werden.

Nach einer Weiterbildung der Erfindung weist das Bauteil wenigstens zwei Bauteilschichten auf, die mittels Laminieren zusammengefügt werden. Dabei können die Bauteilschichten einzeln erzeugt und später zusammengefügt bzw. laminiert werden. Es kann somit ein sogenanntes additives Verfahren zum Einsatz kommen, um das Bauteil aus zwei oder mehr Bauteilschichten aufzubauen.

Nach einer Ausgestaltung der Erfindung wird zur Herstellung des Bauteils wenigstens ein Pulverwerkstoff verwendet. Der Pulverwerkstoff kann durch physikalische, insbesondere thermische, oder chemische Prozesse schichtweise verfestigt werden. Dabei kann der Pulverwerkstoff in Form gebracht und verdichtet werden, wobei zumindest annähernd ein homogenes Material gebildet werden kann.

Die Erfindung betrifft auch ein Bauteil für eine Turbomolekularpumpe nach Anspruch 8. Durch den Aufbau des Bauteils aus einem Pulverwerkstoff kann das Bauteil endkonturnah oder zumindest im Wesentlichen endkonturgetreu mittels eines generativen Fertigungsverfahrens hergestellt werden, wodurch insbesondere auch komplexe Bauteile kostengünstig, mit geringem Materialaufwand und unter Erzeugung von nur geringem Abfall herstellbar sind.

Nach einer Ausgestaltung der Erfindung weist der Pulverwerkstoff Aluminium oder Titan oder eine Kombination aus Aluminium und Titan auf.

Insbesondere können unterschiedliche Materialkombinationen in dem Bauteil vorgesehen sein. Ein Bereich des Bauteils kann zum Beispiel aus einem Pulverwerkstoff ausgestaltet sein, während ein anderer Bereich aus einem anderen Pulverwerkstoff ausgestaltet ist. Ein erster Bereich des Bauteils kann beispielsweise aus Aluminium und ein zweiter Bereich des Bauteils kann beispielsweise aus Titan ausgebildet sein, wobei sich im Grenzbereich zwischen den beiden Bereichen Aluminium-Titan-Übergänge mit intermetallischer Bindung bilden können.

Das Bauteil kann auch aus unterschiedlichen Pulverwerkstoffen ausgebildet werden, die zum Beispiel mittels Pufferlagen kombiniert sind.

Vorzugsweise ist das Bauteil aus wenigstens zwei, insbesondere laminierten, Bauteilschichten aufgebaut. Die Schichten können dabei einzeln hergestellt und in einer vorgegebenen Anordnung relativ zueinander angeordnet und, insbesondere mittels Laminieren, zusammengefügt werden.

Erfindungsgemäß ist das Bauteil eine Rotorscheibe oder eine Statorscheibe einer turbomolekularen Pumpstufe einer Turbomolekularpumpe. Rotorscheiben und/oder Statorscheiben weisen eine verhältnismäßig komplexe Geometrie auf, so dass sich derartige Scheiben besonders vorteilhaft mittels eines Generativen Fertigungsverfahrens herstellen lassen. Die Rotor- oder Statorscheibe weist einen Grundkörper, zum Beispiel einen Tragring, und am Grundkörper angeordnete Schaufeln auf. Der Grundkörper ist dabei aus Aluminium ausgebildet und die Schaufeln können aus Titan ausgebildet sein. Der Grundkörper und die Schaufeln können mittels eines Generativen Fertigungsverfahrens hergestellt sein.

Bei dem Bauteil kann es sich auch um ein während des Betriebs einer Vakuumpumpe hochbelastetes Bauteil handeln, welches insbesondere in denjenigen Bereichen, die während des Betriebs hohen Belastungen ausgesetzt sind, ein Material, wie etwa Titan, aufweist, das den hohen Belastungen Stand hält. In anderen, weniger belasteten Bereichen kann das Bauteil demgegenüber aus einem Material, zum Beispiel Aluminium, ausgestaltet sein, das eine geringere Materialfestigkeit aufweist.

Bei dem Pulverwerkstoff kann es sich beispielsweise um einen vorlegierten Titan und/oder Aluminium enthaltenden Pulverwerkstoff handeln.

Weiterer Gegenstand der Erfindung ist eine Turbomolekularpumpe mit wenigstens einem Bauteil gemäß der vorliegenden Beschreibung. Die hierin in Bezug auf das Bauteil und dessen Herstellung sowie dessen Verwendung in einer Vakuumpumpe beschriebenen Vorteile und vorteilhafte Ausführungsformen stellen entsprechende Vorteile und vorteilhafte Ausführungsformen der Vakuumpumpe dar.

Nachfolgend wird die Erfindung beispielhaft unter Bezugnahme auf die beigefügten Figuren beschrieben. Es zeigen, jeweils schematisch,
- Fig. 1: eine Querschnittsdarstellung einer Turbomolekularpumpe,
- Fig. 2: eine Rotoranordnung einer Turbomolekularpumpe in Draufsicht, und
- Fig. 3: einen Ausschnitt einer Vakuumpumpe mit einer Rotoranordnung im Querschnitt.

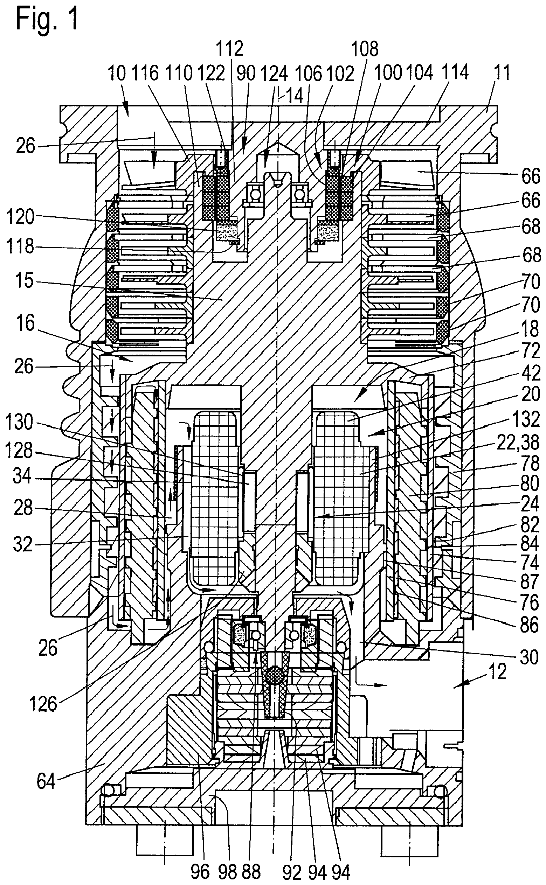

Die in Fig. 1 gezeigte Vakuumpumpe umfasst einen von einem Einlassflansch 11 umgebenen Pumpeneinlass 10 und einen Pumpenauslass 12 sowie mehrere Prozessgaspumpstufen zur Förderung des an dem Pumpeneinlass 10 anstehenden Prozessgases zu dem Pumpenauslass 12. Die Vakuumpumpe umfasst ein Gehäuse 64 und einen in dem Gehäuse 64 angeordneten Rotor 16 mit einer um die Rotationsachse 14 drehbar gelagerten Rotorwelle 15.

Die Pumpe ist im vorliegenden Ausführungsbeispiel als Turbomolekularpumpe ausgebildet und umfasst mehrere pumpwirksam miteinander in Serie geschaltete turbomolekulare Pumpstufen mit mehreren an der Rotorwelle 15 befestigten radialen Rotorscheiben 66 und zwischen den Rotorscheiben 66 angeordneten und in dem Gehäuse 64 festgelegten Statorscheiben 68, wobei eine Rotorscheibe 66 und eine benachbarte Statorscheibe 68 jeweils eine turbomolekulare Pumpstufe bilden. Die Statorscheiben 68 sind durch Abstandsringe 70 in einem gewünschten axialen Abstand zueinander gehalten.

Die Vakuumpumpe umfasst außerdem vier in radialer Richtung ineinander angeordnete und pumpwirksam miteinander in Serie geschaltete Holweckpumpstufen. Der Rotor der Holweckpumpstufen umfasst eine mit der Rotorwelle 15 einteilig ausgebildete Rotornabe 72 und zwei an der Rotornabe 72 befestigte und von dieser getragene zylindermantelförmige Holweckrotorhülsen 74, 76, die koaxial zur Rotationsachse 14 orientiert und in radialer Richtung ineinander geschachtelt sind. Ferner sind zwei zylindermantelförmige Holweckstatorhülsen 78, 80 vorgesehen, die ebenfalls koaxial zu der Rotationsachse 14 orientiert und in radialer Richtung ineinander geschachtelt sind. Eine dritte Holweckstatorhülse ist durch einen Aufnahmeabschnitt 132 des Gehäuses 64 gebildet, der zur Aufnahme und Festlegung des Antriebsmotors 20 dient.

Die pumpaktiven Oberflächen der Holweckpumpstufen sind durch die Mantelflächen, d.h. die radialen Innen- und Außenflächen, der Holweckrotorhülsen 74, 76, der Holweckstatorhülsen 78, 80 und des Aufnahmeabschnitts 132 gebildet. Die radiale Innenfläche der äußeren Holweckstatorhülse 78 liegt der radialen Außenfläche der äußeren Holweckrotorhülse 74 unter Ausbildung eines radialen Holweckspalts 82 gegenüber und bildet mit dieser die erste Holweckpumpstufe. Die radiale Innenfläche der äußeren Holweckrotorhülse 74 steht der radialen Außenfläche der inneren Holweckstatorhülse 80 unter Ausbildung eines radialen Holweckspalts 84 gegenüber und bildet mit dieser die zweite Holweckpumpstufe. Die radiale Innenfläche der inneren Holweckstatorhülse 80 liegt der radialen Außenfläche der inneren Holweckrotorhülse 76 unter Ausbildung eines radialen Holweckspalts 86 gegenüber und bildet mit dieser die dritte Holweckpumpstufe. Die radiale Innenfläche der inneren Holweckrotorhülse 76 liegt der radialen Außenfläche des Aufnahmeabschnitts 132 unter Ausbildung eines radialen Holweckspalts 87 gegenüber und bildet mit dieser die vierte Holweckpumpstufe.

Die vorstehend genannten pumpaktiven Oberflächen der Holweckstatorhülsen 78, 80 und des Aufnahmeabschnitts 132 weisen jeweils mehrere spiralförmig um die Rotationsachse 14 herum in axialer Richtung verlaufende Holwecknuten auf, während die gegenüberliegenden Mantelflächen der Holweckrotorhülsen 74, 76 glatt ausgebildet sind und das Gas im Betrieb der Vakuumpumpe in den Holwecknuten vorantreiben.

Zur drehbaren Lagerung der Rotorwelle 15 sind ein Wälzlager 88 im Bereich des Pumpenauslasses 12 und ein Permanentmagnetlager 90 im Bereich des Pumpeneinlasses 10 vorgesehen.

Im Bereich des Wälzlagers 88 ist an der Rotorwelle 15 eine konische Spritzmutter 92 mit einem zu dem Wälzlager 88 hin zunehmenden Außendurchmesser vorgesehen. Die Spritzmutter 92 steht mit zumindest einem Abstreifer eines Betriebsmittelspeichers in gleitendem Kontakt. Der Betriebsmittelspeicher umfasst mehrere aufeinander gestapelte saugfähige Scheiben 94, die mit einem Betriebsmittel für das Wälzlager 88, zum Beispiel mit einem Schmiermittel, getränkt sind. Im Betrieb der Vakuumpumpe wird das Betriebsmittel durch kapillare Wirkung von dem Betriebsmittelspeicher über den Abstreifer auf die rotierende Spritzmutter 92 übertragen und infolge der Zentrifugalkraft entlang der Spritzmutter 92 in Richtung des größer werdenden Außendurchmessers der Spritzmutter 92 zu dem Wälzlager 88 hin gefördert, wo es z.B. eine schmierende Funktion erfüllt. Das Wälzlager 88 und der Betriebsmittelspeicher sind durch einen wannenförmigen Einsatz 96 und ein Deckelelement 98 der Vakuumpumpe eingefasst.

Das Permanentmagnetlager umfasst eine rotorseitige Lagerhälfte 100 und eine statorseitige Lagerhälfte 102, welche jeweils einen Ringstapel aus mehreren in axialer Richtung aufeinander gestapelten permanentmagnetischen Ringen 104 bzw. 106 umfassen. Die Magnetringe 104, 106 liegen einander unter Ausbildung eines radialen Lagerspalts 108 gegenüber, wobei die rotorseitigen Magnetringe 104 radial außen und die statorseitigen Magnetringe 106 radial innen angeordnet sind. Das in dem Lagerspalt 108 vorhandene magnetische Feld ruft magnetische Abstoßungskräfte zwischen den Magnetringen 104, 106 hervor, welche eine radiale Lagerung der Rotorwelle 15 bewirken.

Die rotorseitigen Magnetringe 104 sind von einem Trägerabschnitt 110 der Rotorwelle getragen, welcher die Magnetringe 104 radial außenseitig umgibt. Die statorseitigen Magnetringe sind von einem statorseitigen Trägerabschnitt 112 getragen, welcher sich durch die Magnetringe 106 hindurch erstreckt und an radialen Streben 114 des Gehäuses 64 aufgehängt ist. Parallel zu der Rotationsachse 14 sind die rotorseitigen Magnetringe 104 in der einen Richtung durch ein mit dem Trägerabschnitt 110 gekoppeltes Deckelelement 116 und in der anderen Richtung durch einen radial vorstehenden Schulterabschnitt des Trägerabschnitts 110 festgelegt. Die statorseitigen Magnetringe 106 sind parallel zu der Rotationsachse 14 in der einen Richtung durch einen mit dem Trägerabschnitt 112 verbundenen Befestigungsring 118 und ein zwischen dem Befestigungsring 118 und den Magnetringen 106 angeordnetes Ausgleichselement 120 und in der anderen Richtung durch einen mit dem Trägerabschnitt 112 verbundenen Stützring 122 festgelegt.

Innerhalb des Magnetlagers ist ein Not- bzw. Fanglager 124 vorgesehen, welches im normalen Betrieb der Vakuumpumpe ohne Berührung steht und erst bei einer übermäßigen radialen Auslenkung des Rotors 16 relativ zu dem Stator in Eingriff gelangt und mitläuft, um einen radialen Anschlag für den Rotor 16 zu bilden, der eine Kollision der rotorseitigen Strukturen mit den statorseitigen Strukturen verhindert. Das Fanglager 124 ist als ungeschmiertes Wälzlager ausgebildet und bildet mit dem Rotor 16 und/oder dem Stator einen radialen Spalt, welcher bewirkt, dass das Fanglager 124 im normalen Pumpbetrieb außer Eingriff ist. Die radiale Auslenkung, bei der das Fanglager 124 in Eingriff gelangt, ist groß genug bemessen, so dass das Fanglager 124 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe umfasst einen Antriebsmotor 20 zum drehenden Antreiben des Rotors 16. Der Antriebsmotor 20 umfasst einen Motorstator 22 mit einem Kern 38 und mit ein oder mehreren in Fig. 1 nur schematisch dargestellten Spulen 42, die in an der radialen Innenseite des Kerns 38 vorgesehenen Nuten des Kerns 38 festgelegt sind.

Der Anker des Antriebsmotors 20 ist durch den Rotor 16 gebildet, dessen Rotorwelle 15 sich durch den Motorstator 22 hindurch erstreckt. Auf dem sich durch den Motorstator 22 hindurch erstreckenden Abschnitt der Rotorwelle 15 ist radial außenseitig eine Permanentmagnetanordnung 128 festgelegt. Zwischen dem Motorstator 22 und dem sich durch den Motorstator 22 hindurch erstreckenden Abschnitt des Rotors 16 ist ein Zwischenraum 24 angeordnet, welcher einen radialen Motorspalt umfasst, über den sich der Motorstator 22 und die Permanentmagnetanordnung 128 zur Übertragung des Antriebsmoments magnetisch beeinflussen.

Die Permanentmagnetanordnung 128 ist in axialer Richtung durch eine auf die Rotorwelle 15 aufgesteckte Befestigungshülse 126 an der Rotorwelle 15 fixiert. Eine Kapselung 130 umgibt die Permanentmagnetanordnung 128 an deren radialer Außenseite und dichtet diese gegenüber dem Zwischenraum 24 ab.

Der Motorstator 22 ist in dem Gehäuse 64 durch den gehäusefesten Aufnahmeabschnitt 132 festgelegt, welcher den Motorstator 22 radial außenseitig umgibt und den Motorstator 22 in radialer und axialer Richtung abstützt. Der Aufnahmeabschnitt 132 begrenzt gemeinsam mit der Rotornabe 72 einen Motorraum 18, in dem der Antriebsmotor 20 aufgenommen ist.

Der Motorraum 18 weist einen auf der einen Seite des Zwischenraums 24 angeordneten und mit der innenliegenden, vierten Holweckpumpstufe gasleitend verbundenen Einlass 28 und einen auf der gegenüberliegenden Seite des Zwischenraums 24 angeordneten und mit dem Pumpenauslass 12 gasleitend verbundenen Auslass 30 auf.

Der Kern 38 des Motorstators 22 weist an seiner radialen Außenseite in dem in Fig. 1 links gezeigten Bereich eine Aussparung 34 auf, die gemeinsam mit dem benachbarten Bereich des Aufnahmeabschnitts 132 einen Kanal 32 bildet, durch den das in den Motorraum 18 geförderte Prozessgas an dem Zwischenraum 24 vorbei von dem Einlass 28 zu dem Auslass 30 förderbar ist.

Der Gasweg, auf dem das Prozessgas von dem Pumpeneinlass 10 zu dem Pumpenauslass 12 gelangt, ist in Fig. 1 durch Pfeile 26 veranschaulicht. Das Prozessgas wird ausgehend von dem Pumpeneinlass 10 zuerst der Reihe nach durch die turbomolekularen Pumpstufen und anschließend der Reihe nach durch die vier Holweckpumpstufen gefördert. Das aus der vierten Holweckpumpstufe austretende Gas gelangt in den Motorraum 18 und wird von dem Einlass 28 des Motorraums 18 durch den Kanal 32 hindurch zu dem Auslass 30 des Motorraums 18 und dem Pumpenauslass 12 gefördert.

Bei der Vakuumpumpe der Fig. 1 bilden die an der Rotorwelle 15 befestigten radialen Rotorscheiben 66 und die zwischen den Rotorscheiben 66 angeordneten und am Gehäuse 64 der Vakuumpumpe festgelegten Statorscheiben 68 jeweils paarweise eine turbomolekulare Pumpstufe.

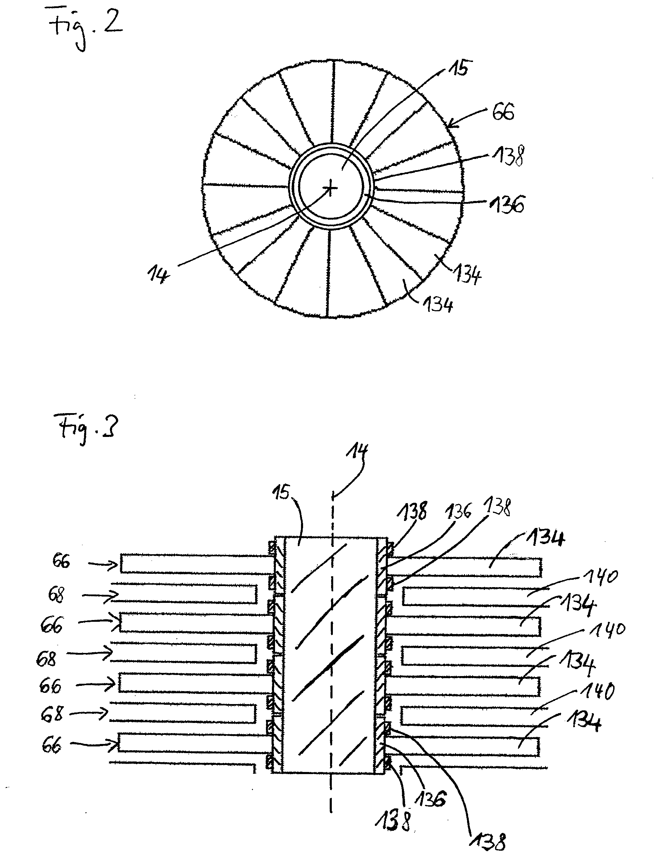

Fig. 2 zeigt eine Draufsicht auf eine Rotorscheibe 66, die einen radial innenliegenden Tragring 136 aufweist, an welchem nach radial außen verlaufende und in Umfangsrichtung des Tragrings 136 gesehen versetzt zueinander angeordnete Schaufeln 134 angeordnet sind. Zwischen der radialen Innenfläche des Tragrings 136 der Rotorscheibe 66 und der radialen Außenfläche der Rotorwelle 15 besteht eine Querpressverbindung, welche die genannten Flächen derart gegeneinander presst, dass ein fester und äußerst sicherer Sitz der Rotorscheibe 66 auf der Rotorwelle 15 gewährleistet ist.

Fig. 3 zeigt eine Anordnung mit mehreren Rotorscheiben 66, die in der vorstehend unter Bezugnahme auf die Fig. 2 beschriebenen Weise auf der Rotorwelle 15 angeordnet sind. In axialer Richtung gesehen wechseln sich die Rotorscheiben 66 mit den Statorscheiben 68 ab, wie vorstehend unter Bezugnahme auf Fig. 1 beschrieben wurde. Von den Statorscheiben 68 sind in Fig. 3 nur die Schaufeln 140 gezeigt, die sich ausgehend von radial außenseitig angeordneten und von dem Gehäuse der Vakuumpumpe getragenen Tragringen der Statorscheiben 68 in Radialrichtung nach innen erstrecken.

Auf jedem Tragring 136 kann in axialer Richtung gesehen oberhalb und unterhalb der Schaufeln 134 jeweils ein Armierungsring 138 angeordnet sein. Zwischen der radialen Innenfläche eines jeweiligen Armierungsrings 138 und der radialen Außenfläche eines jeweiligen Tragrings 136 kann wiederum eine Querpressverbindung ausgebildet sein. Dadurch kann die Festigkeit des Sitzes der jeweiligen Rotorscheibe 66 auf der Rotorwelle 15 verbessert werden.

Jede Rotorscheibe 66 besteht bei der vorstehend beschriebenen Variante somit aus einem Tragring 136 mit daran angeordneten Schaufeln 134. In der entsprechenden Weise besteht jede Statorscheibe 68 aus einem Tragring mit daran angeordneten Schaufeln 140. Bei einer Rotorscheibe 66 bzw. einer Statorscheibe 68 handelt es sich um ein Beispiel eines Bauteils, welches erfindungsgemäß besonders vorteilhaft mittels eines Generativen Fertigungsverfahrens hergestellt wird bzw. hergestellt ist, weil damit insbesondere die verhältnismäßig komplexe Geometrie der Schaufeln 134, 140 besonders einfach realisiert werden kann. Das Generative Fertigungsverfahren umfasst dabei, dass die Rotorscheibe 66 bzw. die Statorscheibe 68 nach wenigstens einem der Verfahren Stereolithographie, Laserschmelzen, Lasersintern, selektives Lasersintern, Schicht-Laminat-Verfahren, Extrusion, Fused Deposition Modelling, Laminated Object Modelling oder 3D-Printing hergestellt wird. Dabei kann das Bauteil 66, 68 schichtweise aus zwei oder mehr Bauteilschichten aufgebaut werden, die zeitlich gesehen nacheinander und räumlich gesehen übereinander mittels eines Generativen Fertigungsverfahrens erzeugt werden. Dabei können auch übereinanderliegende Bauteilschichten mittels Laminieren zusammengefügt werden.

Zur Herstellung des Bauteils wird bevorzugt wenigstens ein Pulverwerkstoff verwendet. Insbesondere wird zur Herstellung des Tragrings (vgl. den Tragring 136 der Rotorscheiben 66) ein anderer Pulverwerkstoff verwendet als zur Herstellung der Schaufeln (vgl. die Schaufeln 134 und 140). Erfindungsgemäß werden der Tragring aus Aluminium und die Schaufeln aus einem anderen Werkstoff, insbesondere Titan, mittels des Generativen Fertigungsverfahrens hergestellt. An den Verbindungsstellen zwischen dem Tragring und den Schaufeln können dabei Aluminium-Titan-Übergänge mit intermetallischer Verbindung gebildet werden.

Die Herstellung der Rotorscheiben 66 und der Statorscheiben 68 mittels eines Generativen Fertigungsverfahrens ist als ein Beispiel zu sehen. Selbstverständlich können nicht erfindungsgemäß auch andere Bauteile, insbesondere solche Bauteile, die eine komplexe Geometrie aufweisen und/oder im Betrieb der Vakuumpumpe hohen Belastungen ausgesetzt sind, mittels eines Generativen Fertigungsverfahrens hergestellt werden.

Es können nicht erfindungsgemäß auch Bauteile von anderen Vakuumpumpentypen als der in Fig.1 dargestellten Turbomolekularpumpe mittels eines Generativen Fertigungsverfahrens hergestellt werden. Beispielsweise können mittels des genannten Verfahrens Bauteile einer Wälzkolbenpumpe hergestellt werden. Beispielsweise können Rotoren einer Wälzkolbenpumpe generativ gefertigt werden, wobei insbesondere eine bei den Rotoren vorgesehene Wabenstruktur auf einfache Weise, mit geringem Materialaufwand und mit geringem Abfall erzeugt werden kann.

### Bezugszeichenliste

- 10: Pumpeneinlass
- 11: Einlassflansch
- 12: Pumpenauslass
- 14: Rotationsachse
- 15: Rotorwelle
- 16: Rotor
- 18: Motorraum
- 20: Antriebsmotor
- 22: Motorstator
- 24: Zwischenraum
- 26: Pfeile, Gasweg
- 28: Einlass
- 30: Auslass
- 32: Kanal
- 34: Aussparung
- 38: Kern
- 42: Spule
- 64: Gehäuse
- 66: Rotorscheibe
- 68: Statorscheibe
- 70: Abstandsring
- 72: Rotornabe
- 74,76: Holweckrotorhülse
- 78,80: Holweckstatorhülse
- 82, 84, 86, 87: Holweckspalt
- 88: Wälzlager
- 90: Permanentmagnetlager
- 92: Spritzmutter
- 94: saugfähige Scheibe
- 96: wannenförmiger Einsatz
- 98: Deckelelement
- 100: rotorseitige Lagerhälfte
- 102: statorseitige Lagerhälfte
- 104, 106: Magnetring
- 108: Lagerspalt
- 110, 112: Trägerabschnitt
- 114: Strebe
- 116: Deckelelement
- 118: Befestigungsring
- 120: Ausgleichselement
- 122: Stützring
- 124: Fanglager
- 126: Befestigungshülse
- 128: Permanentmagnetanordnung
- 130: Kapselung
- 132: Aufnahmeabschnitt
- 134: Schaufeln
- 136: Tragring
- 138: Armierungsring
- 140: Schaufeln

## Patentansprüche

1. Verfahren zur Herstellung eines Bauteils (66, 68) einer Turbomolekularpumpe, wobei das Bauteil (66, 68) mittels eines Generativen Fertigungsverfahrens hergestellt wird,
wobei das Bauteil eine Rotorscheibe (66) oder eine Statorscheibe (68) einer turbomolekularen Pumpstufe einer Turbomolekularpumpe ist, wobei die Scheibe (66, 68) einen Grundkörper (136), insbesondere Tragring, und am Grundkörper (136) angeordnete Schaufeln (134, 140) aufweist, und der Grundkörper (136) aus einem Werkstoff, nämlich Aluminium, ausgebildet wird,
**dadurch gekennzeichnet, dass**
die Schaufeln (134, 140) aus einem anderen Werkstoff, insbesondere Titan, ausgebildet werden.

2. Verfahren nach Anspruch 1,
**dadurch gekennzeichnet, dass**
das Generative Fertigungsverfahren umfasst, dass das Bauteil (66, 68) nach wenigstens einem der Verfahren Stereolithografie, Laserschmelzen, Lasersintern, selektives Lasersintern, Schicht-Laminat-Verfahren, Extrusion, Fused Deposition Modeling, Laminated Object Modelling, Elektronenstrahlschmelzen oder 3D Printing hergestellt wird.

3. Verfahren nach Anspruch 1 oder 2,
**dadurch gekennzeichnet, dass**
das Bauteil (66, 68) auf der Basis von wenigstens einem rechnerinternen Datenmodell des Bauteils (66, 68) hergestellt wird.

4. Verfahren nach einem der vorhergehenden Ansprüche,
**dadurch gekennzeichnet, dass**
das Bauteil (66, 68) aus wenigstens einem formlosen oder formneutralen Material mittels chemischer und/oder physikalischer Prozesse gefertigt wird.

5. Verfahren nach einem der vorhergehenden Ansprüche,
**dadurch gekennzeichnet, dass**
das Bauteil (66, 68) aus wenigstens zwei Bauteilschichten aufgebaut wird, die zeitlich gesehen nacheinander und räumlich gesehen zumindest im Wesentlichen übereinander gefertigt werden.

6. Verfahren nach einem der vorhergehenden Ansprüche,
**dadurch gekennzeichnet, dass**
wenigstens zwei Bauteilschichten des Bauteils (66, 68) mittels Laminieren zusammengefügt werden.

7. Verfahren nach einem der vorhergehenden Ansprüche,
**dadurch gekennzeichnet, dass**
zur Herstellung des Bauteils (66, 68) wenigstens ein Pulverwerkstoff verwendet wird.

8. Bauteil für eine Turbomolekularpumpe, insbesondere hergestellt oder herstellbar nach einem Verfahren gemäß einem der vorhergehenden Ansprüche,
wobei, das Bauteil (66, 68) aus einem Pulverwerkstoff aufgebaut ist, wobei das Bauteil eine Rotorscheibe (66) oder eine Statorscheibe (68) einer turbomolekularen Pumpstufe einer Turbomolekularpumpe ist, wobei die Scheibe (66, 68) einen Grundkörper (136), insbesondere Tragring, und am Grundkörper (136) angeordnete Schaufeln (134, 140) aufweist, und der Grundkörper (136) aus einem Werkstoff, nämlich Aluminium, ausgebildet ist,
**dadurch gekennzeichnet, dass**
die Schaufeln (134, 140) aus einem anderen Werkstoff, insbesondere Titan, ausgebildet sind.

9. Bauteil nach Anspruch 8,
**dadurch gekennzeichnet, dass**
der Pulverwerkstoff Aluminium oder Titan oder eine Kombination aus Aluminium und Titan, insbesondere Aluminium-Titanübergänge mit intermetallischer Bindung, aufweist.

10. Bauteil nach Anspruch 8 oder 9,
**dadurch gekennzeichnet, dass**
das Bauteil (66, 68) aus wenigstens zwei, insbesondere laminierten, Bauteilschichten aufgebaut ist.

11. Bauteil nach einem der Ansprüche 8 bis 10,
**dadurch gekennzeichnet, dass**
das Bauteil (66, 68) ein ringförmiges Bauteil ist.

12. Turbomolekularpumpe mit wenigstens einem Bauteil (66, 68) nach einem der Ansprüche 8 bis 11.

## Claims

1. A method of manufacturing a component (66, 68) of a turbomolecular pump,
wherein the component (66, 68) is manufactured by means of a generative manufacturing process; and
wherein the component is a rotor disk (66) or a stator disk (68) of a turbomolecular pump stage of a turbomolecular pump, with the disk (66, 68) having a base body (136), in particular a support ring, and blades (134, 140) arranged at the base body (136), and with the base body (136) being formed from a material, namely aluminum,
**characterized in that**
the blades (134, 140) are formed from another material, in particular titanium.

2. A method in accordance with claim 1,
**characterized in that**
the generative manufacturing process comprises manufacturing the component (66, 68) in accordance with at least one of the processes stereolithography, laser melting, laser sintering, selective laser sintering, sheet lamination processes, extrusion, fused deposition modeling, laminated object modeling, electron beam melting or 3D printing.

3. A method in accordance with claim 1 or claim 2,
**characterized in that**
the component (66, 68) is manufactured on the basis of at least one computer-internal data model of the component (66, 68).

4. A method in accordance with any one of the preceding claims,
**characterized in that**
the component (66, 68) is produced from at least one shapeless or neutrally shaped material by means of chemical and/or physical processes.

5. A method in accordance with any one of the preceding claims,
**characterized in that**
the component (66, 68) is built up from at least two component layers which are produced after one another viewed in time and at least substantially above one another viewed in space.

6. A method in accordance with any one of the preceding claims,
**characterized in that**
at least two component layers of the component (66, 68) are joined together by means of lamination.

7. A method in accordance with any one of the preceding claims,
**characterized in that**
at least one powder material is used to manufacture the component (66, 68).

8. A component for a turbomolecular pump which is in particular manufactured or can be manufactured in accordance with a method in accordance with any one of the preceding claims,
wherein the component (66, 68) is made up of a powder material; and
wherein the component is a rotor disk (66) or a stator disk (68) of a turbomolecular pump stage of a turbomolecular pump, with the disk (66, 68) having a base body (136), in particular a support ring, and blades (134, 140) arranged at the base body (136), and with the base body (136) being formed from a material, namely aluminum,
**characterized in that**
the blades (134, 140) are formed from another material, in particular titanium.

9. A component in accordance with claim 8,
**characterized in that**
the powder material has aluminum or titanium or a combination of aluminum and titanium, in particular aluminum-titanium transitions having an intermetallic bond.

10. A component in accordance with claim 8 or claim 9,
**characterized in that**
the component (66, 68) is built up of at least two component layers which are in particular laminated.

11. A component in accordance with any one of the claims 8 to 10,
**characterized in that**
the component (66, 68) is an annular component.

12. A turbomolecular pump comprising at least one component (66, 68) in accordance with any one of the claims 8 to 11.

## Revendications

1. Procédé de fabrication d'un composant (66, 68) d'une pompe turbomoléculaire,
dans lequel
le composant (66, 68) est fabriqué au moyen d'un procédé de fabrication additif,
le composant est un disque de rotor (66) ou un disque de stator (68) d'un étage de pompage turbomoléculaire d'une pompe turbomoléculaire,
le disque (66, 68) présente un corps de base (136), en particulier un anneau de support, et des aubes (134, 140) disposées sur le corps de base (136), et le corps de base (136) est réalisé en un matériau, à savoir en aluminium,
**caractérisé en ce que**
les aubes (134, 140) sont réalisées en un autre matériau, en particulier en titane.

2. Procédé selon la revendication 1,
**caractérisé en ce que**
le procédé de fabrication additif inclut de réaliser le composant (66, 68) par au moins l'un des procédés que sont la stéréolithographie, la fusion par laser, le frittage par laser, le frittage sélectif par laser, le procédé de stratification en couches, l'extrusion, la modélisation par dépôt de matière fondue (Fused Déposition Modeling), la modélisation d'objet stratifié (Laminated Object Modeling), la fusion par faisceau électronique ou l'impression 3D.

3. Procédé selon la revendication 1 ou 2,
**caractérisé en ce que**
le composant (66, 68) est fabriqué sur la base d'au moins un modèle de données interne à l'ordinateur du composant (66, 68).

4. Procédé selon l'une des revendications précédentes,
**caractérisé en ce que**
le composant (66, 68) est fabriqué en au moins un matériau sans forme ou de forme neutre par des processus chimiques et/ou physiques.

5. Procédé selon l'une des revendications précédentes,
**caractérisé en ce que**
le composant (66, 68) est composé d'au moins deux couches de composant qui sont fabriquées l'une après l'autre dans le temps et au moins sensiblement l'une au-dessus de l'autre dans l'espace.

6. Procédé selon l'une des revendications précédentes,
**caractérisé en ce que**
au moins deux couches du composant (66, 68) sont assemblées par stratification.

7. Procédé selon l'une des revendications précédentes,
**caractérisé en ce que**
pour réaliser le composant (66, 68), on utilise au moins un matériau en poudre.

8. Composant pour une pompe turbomoléculaire, en particulier réalisé ou réalisable par un procédé selon l'une des revendications précédentes, dans lequel
le composant (66, 68) est composé en un matériau en poudre,
le composant est un disque de rotor (66) ou un disque de stator (68) d'un étage de pompage turbomoléculaire d'une pompe turbomoléculaire,
le disque (66, 68) présente un corps de base (136), en particulier un anneau de support, et des aubes (134, 140) disposées sur le corps de base (136), et le corps de base (136) est réalisé en un matériau, à savoir en aluminium,
**caractérisé en ce que**
les aubes (134, 140) sont réalisées en un autre matériau, en particulier en titane.

9. Composant selon la revendication 8,
**caractérisé en ce que**
le matériau en poudre présente de l'aluminium ou du titane ou une combinaison d'aluminium et de titane, en particulier des transitions aluminium-titane ayant une liaison intermétallique.

10. Composant selon la revendication 8 ou 9,
**caractérisé en ce que**
le composant (66, 68) est composé d'au moins deux couches de composants en particulier stratifiées.

11. Composant selon l'une des revendications 8 à 10,
**caractérisé en ce que**
le composant (66, 68) est un composant annulaire.

12. Pompe turbomoléculaire
comportant au moins un composant (66, 68) selon l'une des revendications 8 à 11.
